# FASCICULE DE BREVET EUROPEEN

(11) **EP 3 191 368 B1**
(45) Date de publication et mention de la délivrance du brevet: **24.08.2022**
(21) Numéro de dépôt: 15770564.1
(22) Date de dépôt: 07.09.2015
(51) Int. Cl.: B64D 29/06

(54) **ENSEMBLE PROPULSIF POUR AÉRONEF ET PROCÉDÉ D'OUVERTURE D'UN CAPOT MOBILE DUDIT ENSEMBLE PROPULSIF**
ANTRIEBSEINHEIT FÜR EIN FLUGZEUG UND VERFAHREN ZUR ÖFFNUNG EINER BEWEGLICHEN HAUBE DER BESAGTEN ANTRIEBSEINHEIT
PROPULSION UNIT FOR AN AIRCRAFT AND METHOD FOR OPENING A MOVABLE COWL OF SAID PROPULSION UNIT

(30) Priorité: 08.09.2014 FR 1458399
(43) Date de publication de la demande: 19.07.2017
(73) Titulaire: Safran Nacelles, 76700 Gonfreville-l'Orcher (FR)
(72) Inventeur: JORET, Jean-Philippe, F-27210 Beuzeville (FR); LESTEVEN, Emmanuel, F-27500 Triqueville (FR); PEYRON, Vincent, F-76620 Le Havre (FR); BOILEAU, Patrick, F-31170 Tournefeuille (FR)
(74) Mandataire: Germain Maureau
(86) Numéro de dépôt international: PCT/FR2015/052365
(87) Numéro de publication internationale: WO 2016/038286

(56) Documents cités:
- FR-A1- 2 771 710
- FR-A1- 2 920 145
- US-A- 4 399 966

## Description

La présente invention concerne un ensemble propulsif pour aéronef et un procédé d'ouverture d'un capot mobile dudit ensemble propulsif.

Un aéronef est mu par plusieurs turboréacteurs logés chacun dans une nacelle. Une nacelle présente généralement une structure tubulaire suivant un axe longitudinal comprenant une section amont fixe constituée par une entrée d'air en amont du turboréacteur, une section médiane fixe destinée à entourer une soufflante du turboréacteur, une section aval abritant des moyens d'inversion de poussée et destinée à entourer la chambre de combustion du turboréacteur, l'amont et l'aval de la nacelle étant définis par référence au sens d'écoulement du flux d'air dans la nacelle en fonctionnement jet direct, l'amont de la nacelle correspondant à une partie de la nacelle par laquelle le flux d'air pénètre, et l'aval correspondant à une zone d'éjection dudit flux d'air.

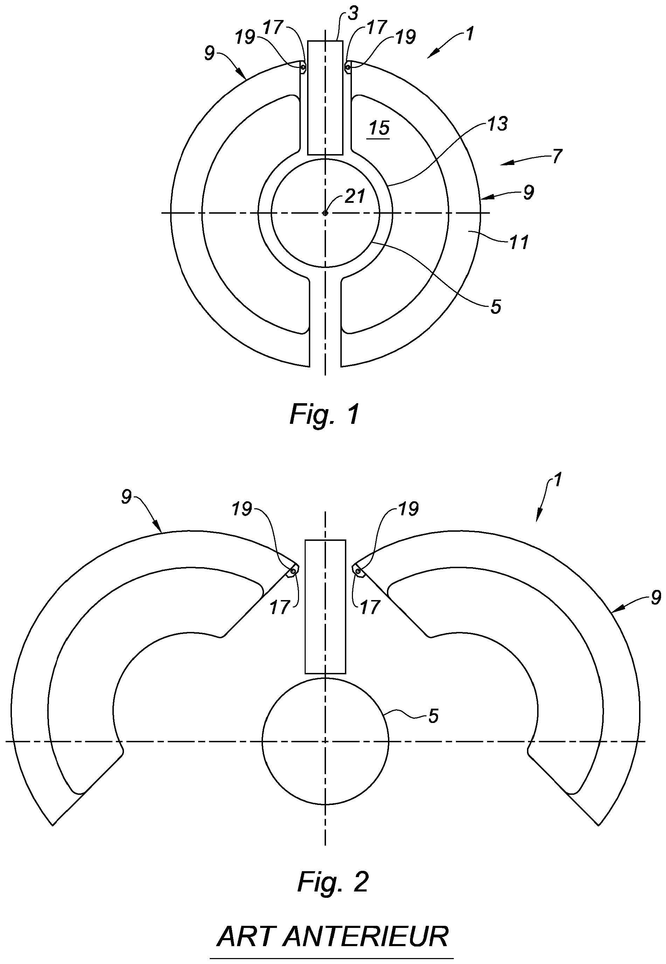

Un ensemble propulsif pour aéronef est constitué par une nacelle et par un turboréacteur. On a représenté schématiquement sur la figure 1 une partie aval d'un ensemble propulsif 1 pour aéronef, en position fermée (un ensemble propulsif similaire est par exemple connu du document FR 2 920 145 A1).

Un tel ensemble propulsif 1 est typiquement suspendu à une structure fixe de l'avion, par exemple sous une aile ou sur le fuselage, par l'intermédiaire d'un mât de suspension 3 rattaché au turboréacteur 5.

Les nacelles modernes sont destinées à abriter un turboréacteur double flux apte à générer par l'intermédiaire des pales de la soufflante en rotation un flux d'air chaud (également appelé « flux primaire ») issu de la chambre de combustion du turboréacteur, et un flux d'air froid (« flux secondaire ») qui circule à l'extérieur du turboréacteur à travers un passage annulaire également, appelé veine d'écoulement. Les termes « aval » et « amont » s'entendent ici par rapport au sens d'écoulement de circulation de l'air dans le turboréacteur. Un turboréacteur comporte usuellement une section dite « amont » comprenant les pales de la soufflante et une section dite « aval » abritant le générateur de gaz.

La partie aval d'un ensemble propulsif comprend un inverseur de poussée 7 comprenant deux demi-capots 9 semi-annulaires entourant la section aval du turboréacteur 5.

L'inverseur de poussée 7 représenté à la figure 1 est de type « D-duct », c'est-à-dire que chaque demi-capot 9 de l'inverseur comprend une demi-structure externe fixe 11, dite « Outer Fixed Structure » (OFS) et une demi-structure interne fixe 13 concentrique, dite « Inner Fixed Structure » (IFS), entourant la structure du moteur proprement dite à l'aval du turboréacteur et solidaire de la demi-structure externe fixe 11.

Les demi-structures interne 11 et externe 13 définissent une veine 15 d'écoulement destinée à canaliser le flux d'air froid qui circule à l'extérieur du turboréacteur. Les flux primaire et secondaire sont éjectés du moteur par l'arrière de la nacelle.

La structure externe fixe 13 comprend une partie amont et une partie aval sur laquelle est monté un capot (non visible sur les figures) mobile en translation et adapté pour recouvrir des moyens d'inversion de poussée lorsque ces derniers ne sont pas employés. En cas de besoin des moyens d'inversion de poussée, le capot mobile translate vers l'aval en une position appelée « position de jet inverse » dans laquelle les moyens d'inversion de poussée sont découverts.

Chaque demi-capot 9 de l'inverseur de poussée est monté sur une charnière 17 fixée au mât de suspension 3. Afin de réaliser la maintenance du turboréacteur 5, il est connu d'accéder à ce dernier en pivotant chaque demi-capot 9 de l'inverseur de poussée autour d'axes 19 sensiblement colinéaires à un axe longitudinal 21 de l'ensemble propulsif, grâce aux charnières 17, comme représenté à la figure 2 illustrant schématiquement la partie aval de l'ensemble propulsif 1 en position de maintenance. Dans cette position, chaque demi-capot 9 de l'inverseur de poussée a pivoté autour des axes 19, et un opérateur peut accéder au turboréacteur 5 pour effectuer la maintenance du turboréacteur.

Sont également connus de l'art antérieur des inverseurs de poussée de type C-duct, pour lesquels chaque demi-capot comprend une demi-structure externe et une demi-structure interne similaires à celles décrites en référence aux figures 1 à 4. A la différence de l'inverseur de poussée de type D-duct précédemment décrit, la demi-structure interne d'un demi-capot d'inverseur de poussée de type C-duct n'est pas solidaire de la demi-structure externe dudit demi-capot d'inverseur. Quel que soit le type d'inverseur, C-duct ou D-duct, le passage d'une position de fonctionnement selon laquelle l'inverseur est fermé vers une position de maintenance selon laquelle l'inverseur est ouvert est typiquement réalisé par l'actionnement d'un vérin.

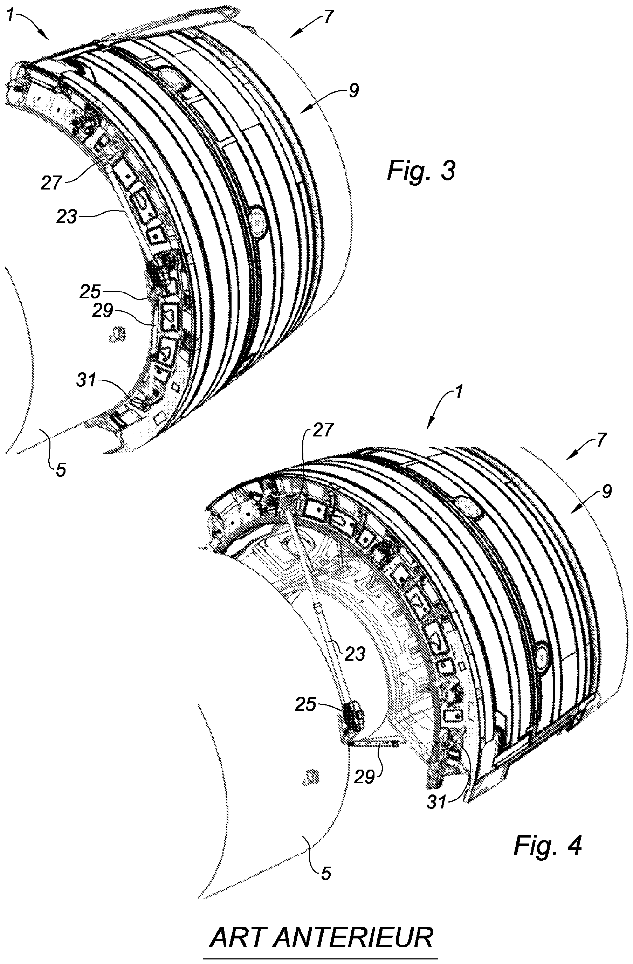

On se réfère aux figures 3 et 4, illustrant la partie aval de l'ensemble propulsif 1 en vue isométrique, l'inverseur de poussée 7 étant représenté respectivement en position de fonctionnement et en position de maintenance.

Le pivotement de chaque demi-capot 9 de l'inverseur 7 est obtenu par l'actionnement d'un vérin 23 dit vérin « COS », acronyme fréquemment utilisé pour désigner le terme anglo-saxon « Cowl Opening System ». Le vérin 23, qui peut être par exemple hydraulique, électrique ou pneumatique, comprend une partie fixe montée sur une ferrure 25 montée sur le turboréacteur 5, et une partie mobile fixée sur une ferrure 27 montée sur le demi-capot 9 d'inverseur.

Le maintien des capots en position de maintenance est en outre renforcé grâce à une bielle 29 de sécurité, bielle fréquemment désignée par l'acronyme « HOR » pour « Hold Open Rod » en terminologie anglo-saxonne La bielle 29 comprend une première extrémité fixée sur la ferrure 25 montée sur le turboréacteur 5, et une deuxième extrémité fixée à une ferrure 31 montée sur le demi-capot 9.

L'accès au turboréacteur peut également requérir l'ouverture de demi-capots constituant le carter de soufflante du turboréacteur. L'ouverture de ces demi-capots peut elle aussi être effectuée à la manière de ce qui a été décrit en référence aux figures 1 et 2, c'est-à-dire en pivotant ces demi-capots autour d'axes sensiblement colinéaires à l'axe longitudinal de l'ensemble propulsif par l'intermédiaire de vérins COS et de bielles HOR.

Parmi les opérations de maintenance couramment réalisées sur un turboréacteur, il existe des opérations de maintenance dites « régulières » et des opérations de maintenance dites « irrégulières ».

Les opérations de maintenance régulières concernent des équipements de l'ensemble propulsif qui nécessitent un contrôle fréquent, typiquement plusieurs fois par mois. Il s'agit d'équipements généralement positionnés à proximité du générateur de gaz du turboréacteur, plus généralement dans une zone de l'ensemble propulsif nécessitant un angle d'ouverture de chaque demi-capot d'inverseur compris entre 30 et 45 degrés environ.

Les opérations de maintenance irrégulières concernent quant à elles des équipements de l'ensemble propulsif pour lesquels un contrôle peu fréquent est requis, typiquement une à deux fois durant la vie de l'avion. Il s'agit d'équipements de l'ensemble propulsif généralement positionnés à proximité du mât de suspension du turboréacteur, plus généralement dans une zone de l'ensemble propulsif nécessitant un angle d'ouverture de chaque demi-capot d'inverseur compris entre 50 et 60 degrés environ.

Les opérations de maintenance régulières ou irrégulières sont accomplies grâce à au vérin COS 23 et à la bielle HOR 29 décrite en référence aux figures 3 et 4.

A cet effet, les vérins 23 de l'ensemble propulsif présentent une course permettant d'atteindre les angles d'ouvertures des demi-capots 9 requis pour réaliser des opérations de maintenance irrégulières. Les bielles 29 et les ferrures 25, 27 et 31 sont quant à elles dimensionnées pour supporter les efforts engendrés par l'ouverture des demi-capots lors d'un passage en position de maintenance irrégulière. De telles courses des vérins un tel dimensionnement des ferrures et des bielles alourdissent sensiblement la masse de la nacelle.

Par ailleurs, ces vérins COS et ces bielles HOR de l'art antérieur présentent deux longueurs distinctes de déploiement, chaque longueur permettant d'obtenir un angle d'ouverture pour des opérations de maintenance régulières et pour des opérations de maintenance irrégulières. Chacune de ces deux positions requiert la présence d'un stabilisateur et d'un indicateur de stabilité des bielles et vérins, visant à indiquer à l'opérateur la position atteinte et à interdire toute fermeture inopinée du capot. La présence de ces stabilisateur et indicateur de position sur les vérins COS et bielles HOR de l'art antérieur complexifie et alourdit la masse de ces bielles et vérins. De plus, outre la fiabilité limitée qu'offrent ces bielles et vérins de l'art antérieur, leur complexité de fabrication entraîne des coûts de fabrication relativement importants.

Selon un autre mode de réalisation de l'art antérieur, deux points d'attache de la bielle HOR et deux points d'attache du vérin COS équipent le capot, permettant d'atteindre les positions de maintenance régulières et irrégulières avec des bielles et vérins présentant une longueur de déploiement unique. Le capot comprend à cet effet des ferrures adaptées pour supporter les vérins COS et bielles HOR adaptées pour supporter les deux positions de maintenance. La présence de ces deux ferrures pour chaque vérin et pour chaque bielle alourdit sensiblement la masse de la nacelle.

La présente invention a pour but de fournir un moyen simple d'utilisation permettant d'accéder à l'ensemble propulsif pour réaliser des opérations de maintenance irrégulières, tout en réduisant la masse de la nacelle par rapport à l'art antérieur.

A cet effet, la présente invention se rapporte à un ensemble propulsif pour aéronef, selon les revendications indépendantes 1, 2 et 3.

Ainsi, en prévoyant de dimensionner le vérin, la bielle de sécurité et la ferrure principale de façon à permettre des opérations de maintenance régulières uniquement, le poids de la nacelle est considérablement allégé par rapport à l'art antérieur, en ce qu'il n'est plus nécessaire de dimensionner la course de vérin et la longueur de bielle de sécurité de façon à permettre un passage et un maintien du demi-capot associé dans une position permettant des opérations de maintenance irrégulières, pour lesquelles l'angle d'ouverture dudit capot est supérieur à celui requis pour permettre l'ouverture dudit capot dans une position permettant des opérations de maintenance régulières.

Le passage dans une position du capot mobile autorisant des opérations de maintenance irrégulières est rendu possible grâce à la ferrure secondaire, dimensionnée pour permettre des opérations de maintenance irrégulières et supportant au moins le vérin.

Selon des caractéristiques toutes optionnelles de l'ensemble propulsif selon l'invention :
- la ferrure principale et la ferrure secondaire comprennent des alésages adaptés pour recevoir des moyens de maintien de la ferrure secondaire dans une position permettant des opérations de maintenance régulières ou dans une position permettant des opérations de maintenance irrégulières ;
- les moyens de maintien de la ferrure secondaire sur la ferrure principale comprennent des tiges de maintien adaptées pour traverser au moins partiellement lesdits alésages ;
- la bielle de sécurité est montée sur l'ensemble stationnaire de l'ensemble propulsif lorsque la ferrure secondaire est positionnée de façon à autoriser des opérations de maintenance irrégulières ;
- la ferrure secondaire présente une forme sensiblement triangulaire ;
- la bielle de sécurité est montée sur une extension de la ferrure secondaire ;
- le capot est constitué par un capot compris dans le groupe suivant : demi-capot d'inverseur de poussée de type D-duct, demi-capot d'inverseur de poussée de type C-duct, porte d'inverseur de poussée à portes, demi-capot de carter de soufflante du turboréacteur.

La présente invention concerne également un procédé d'ouverture d'un capot mobile d'ensemble propulsif selon le premier mode de réalisation de l'invention, remarquable en ce qu'il comprend les étapes suivantes visant à :
- allonger le vérin jusqu'à ouvrir le capot dans une position adaptée pour des opérations de maintenance régulières ;
- déconnecter le vérin de la ferrure principale ;
- positionner la ferrure secondaire sur la ferrure principale ; la ferrure secondaire est considérée comme un outillage de maintenance et n'est donc pas embarquée dans l'avion. Elle est seulement disponible dans les ateliers de maintenance qui réalisent les tâches de maintenance irrégulières. Les tâches de maintenance régulières doivent pouvoir quant à elles pouvoir être réalisées sur n'importe quel aéroport où se pose l'avion ;
- fixer le vérin sur la ferrure secondaire de façon à ce que ledit vérin reprennent les efforts du capot ;
- déconnecter la bielle de sécurité de la ferrure principale ;
- fixer la bielle de sécurité sur la ferrure secondaire.

La présente invention concerne en outre un procédé d'ouverture d'un capot mobile d'ensemble propulsif selon le deuxième mode de réalisation de l'invention, par exemple selon la première variante du deuxième mode de réalisation ou selon la deuxième variante du deuxième mode de réalisation, remarquable en ce qu'il comprend les étapes suivantes visant à :
- allonger le vérin jusqu'à ouvrir le capot dans une position adaptée pour des opérations de maintenance régulières ;
- faire pivoter la ferrure secondaire de façon à au moins augmenter la distance relative entre un point d'attache du vérin et la ferrure principale ;
- déconnecter la bielle de sécurité de la ferrure principale ;
- fixer la bielle de sécurité sur la ferrure secondaire ou sur l'ensemble 10 stationnaire de l'ensemble propulsif.

D'autres caractéristiques, buts et avantages de la présente invention apparaîtront à la lecture de la description qui va suivre et à l'examen des figures ciannexées, dans lesquelles :
- la figure 1 représente schématiquement une partie aval d'un ensemble propulsif de l'art antérieur, en position fermée ;
- la figure 2 représente schématiquement la partie aval de l'ensemble propulsif de la figure 1, en position de maintenance ;
- la figure 3 illustre la partie aval de l'ensemble propulsif de l'art 20 antérieur en vue isométrique, dans lequel l'inverseur de poussée est représenté en position de fonctionnement ;
- la figure 4 illustre est une vue similaire à celle de la figure 3, l'inverseur de poussée est étant représenté en position de maintenance ;
- la figure 5 représente en vue isométrique l'ensemble propulsif selon 25 un premier mode de réalisation de l'invention, dans lequel le capot d'inverseur est en position de fonctionnement ;
- la figure 6 est une vue de détail de la zone VI de la figure 5 ;
- la figure 7 représente en vue isométrique l'ensemble propulsif de la figure 5, dans lequel le capot d'inverseur se trouve en position de maintenance 30 permettant un accès au turboréacteur pour des opérations de maintenance régulières ;
- la figure 8 est une vue de détail de la zone VIII de la figure 7 ;
- les figures 9a à 9f illustrent les étapes du procédé selon l'invention permettant de passer d'une position de maintenance du capot d'inverseur permettant 35 un accès au turboréacteur pour des opérations de maintenance régulières vers une position de maintenance permettant un accès au turboréacteur pour des opérations de maintenance irrégulières ;
- la figure 10 représente en vue isométrique l'ensemble propulsif de la figure 5, dans lequel le capot d'inverseur se trouve en position de maintenance permettant un accès au turboréacteur pour des opérations de maintenance irrégulières ;
- les figures 11a à 11f se rapportent à une première variante d'un deuxième mode de réalisation de l'invention ;
- les figures 12a à 12f se rapportent à une deuxième variante du deuxième mode de réalisation de l'invention.

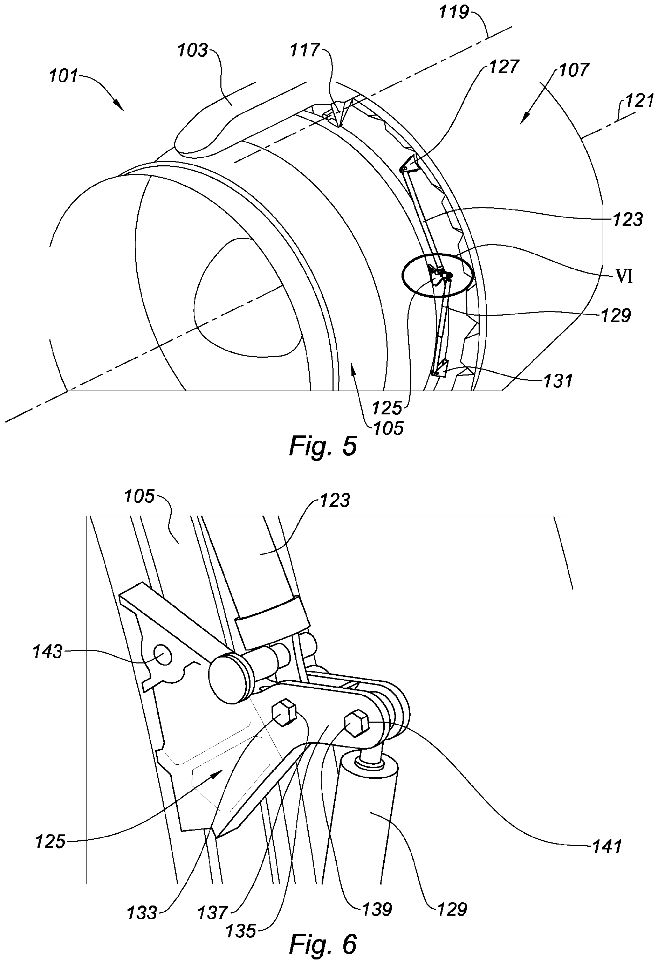

A noter que dans la description et dans les revendications, les termes « amont » et «aval » doivent s'entendre par rapport à la circulation du flux d'air à l'intérieur de l'ensemble propulsif formé par la nacelle et le turboréacteur, c'est-à-dire de la gauche vers la droite en référence aux figures 5 à 12.

En outre, sur l'ensemble des figures, des références identiques ou analogues représentent des organes ou ensembles d'organes identiques ou analogues.

Dans la description et les revendications de la présente demande, on entend par ensemble stationnaire de l'ensemble propulsif une région de l'ensemble propulsif qui reste immobile lors d'un passage entre une position de fonctionnement et une position de maintenance. Cette région peut appartenir au turboréacteur ou à la nacelle.

Les figures 5 à 10 se réfèrent à un ensemble propulsif 101 réalisé selon un premier mode de réalisation de l'invention.

On se réfère à la figure 5, représentant l'ensemble propulsif 101 en vue isométrique, dans lequel le capot d'inverseur se trouve en position de fonctionnement.

L'ensemble propulsif 101 comprend une nacelle, en partie aval de laquelle est monté un inverseur de poussée 107, et un turboréacteur 105, constituant un ensemble stationnaire de l'ensemble propulsif.

L'ensemble propulsif 101 est suspendu à une structure fixe de l'avion, par exemple sous une aile ou sur le fuselage, par l'intermédiaire d'un mât de suspension 103, rattaché au turboréacteur 105.

L'inverseur de poussée 107 de l'ensemble propulsif 101 comprend deux demi-capots 109 semi-annulaires entourant la section aval du turboréacteur 105. Sur la figure 5, un seul de ces deux demi-capots a été représenté.

L'inverseur de poussée 107 représenté à la figure 5 est de type « D-duct », mais l'invention s'applique également aux inverseurs de poussée de type « C-duct ».

Le demi-capot 109 de l'inverseur de poussée 107 est monté sur une charnière 117 fixée au mât de suspension 103.

L'inverseur de poussée 107 de l'ensemble propulsif 101 comprend des vérins 123 dits « COS », vérins pouvant être par exemple hydrauliques, électriques ou pneumatiques, ainsi que des bielles de sécurité 129 dites « HOR ».

Chaque vérin 123 comprend une partie fixe montée sur la ferrure principale 125, et une partie mobile fixée sur une ferrure 127 montée sur le demi-capot 9 d'inverseur, tandis que chaque bielle de sécurité 129 est rendue solidaire du turboréacteur et du capot mobile, en ce chaque bielle comprend une première extrémité fixée sur la ferrure principale 125 et une deuxième extrémité fixée à une ferrure 131 montée sur le demi-capot 109.

Comme visible plus en détail sur la figure 6, illustrant un agrandissement de la zone VI de la figure 5, le vérin 123 est solidaire du turboréacteur 105 par l'intermédiaire de la ferrure principale 125 montée sur le turboréacteur 105. Le vérin 123 est monté sur la ferrure principale par l'intermédiaire d'une tige de maintien 133, sensiblement transverse à une paroi latérale 135 de ladite ferrure et traversant la ferrure principale grâce à un alésage 137 traversant l'épaisseur de la ferrure 125. La bielle de sécurité 129 est quant à elle montée pivotante sur une tige de maintien 139, elle aussi sensiblement transverse à la paroi latérale 135 de ladite ferrure et traversant la ferrure principale grâce à un alésage 141 traversant l'épaisseur de la ferrure 125. La ferrure principale 125 comprend en outre un alésage 143 traversant l'épaisseur de ladite ferrure.

Selon l'invention, la ferrure principale 125 est dimensionnée pour permettre des opérations de maintenance régulières uniquement, c'est-à-dire qu'elle est présente des caractéristiques mécaniques adaptées pour supporter des opérations de maintenance autorisant un accès au turboréacteur pour des opérations de maintenance régulières.

Le passage depuis une position de fonctionnement vers une position de maintenance permettant un accès au turboréacteur pour des opérations de maintenance régulières est réalisé en pivotant chaque demi-capot 109 de l'inverseur de poussée 107 autour d'un axe 119 sensiblement colinéaire à un axe longitudinal 121 de l'ensemble propulsif, grâce aux charnières 117.

Le pivotement de chaque demi-capot 109 de l'inverseur 107 est obtenu par l'actionnement du vérin 123. Selon l'invention, le vérin 123 est dimensionné pour permettre un passage alternatif entre une position de fonctionnement et une position de maintenance permettant un accès au turboréacteur pour des opérations de maintenance régulières uniquement.

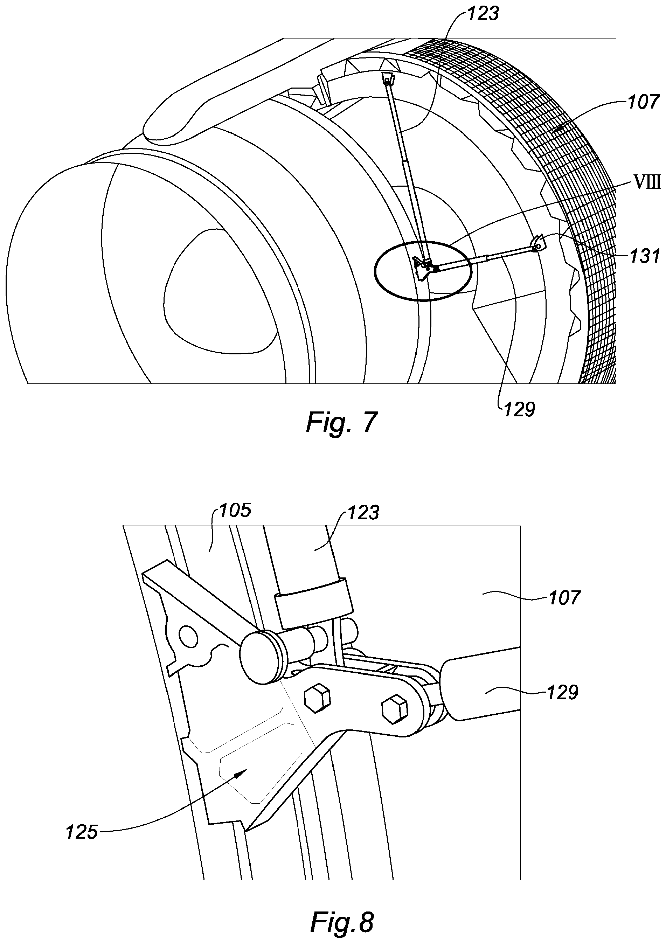

La figure 7 illustre le demi-capot 109 en position de maintenance régulière, position selon laquelle le demi-capot 109 a pivoté d'un angle compris entre environ 30 et environ 45 degrés par rapport à sa position de fonctionnement. Cette position de maintenance, dite régulière, autorise un accès aux équipements généralement positionnés à proximité du générateur de gaz du turboréacteur.

Le maintien de chaque demi-capot 109 en position de maintenance régulière est renforcé grâce à la bielle de sécurité 129, dimensionnée pour maintenir le demi-capot en position de maintenance permettant un accès au turboréacteur pour des opérations de maintenance régulières uniquement.

La figure 8 est un agrandissement de la zone VIII de la figure 7, sur laquelle la bielle de sécurité 129 a pivoté sur la tige 139, par rapport à la position qui était représentée sur la figure 6.

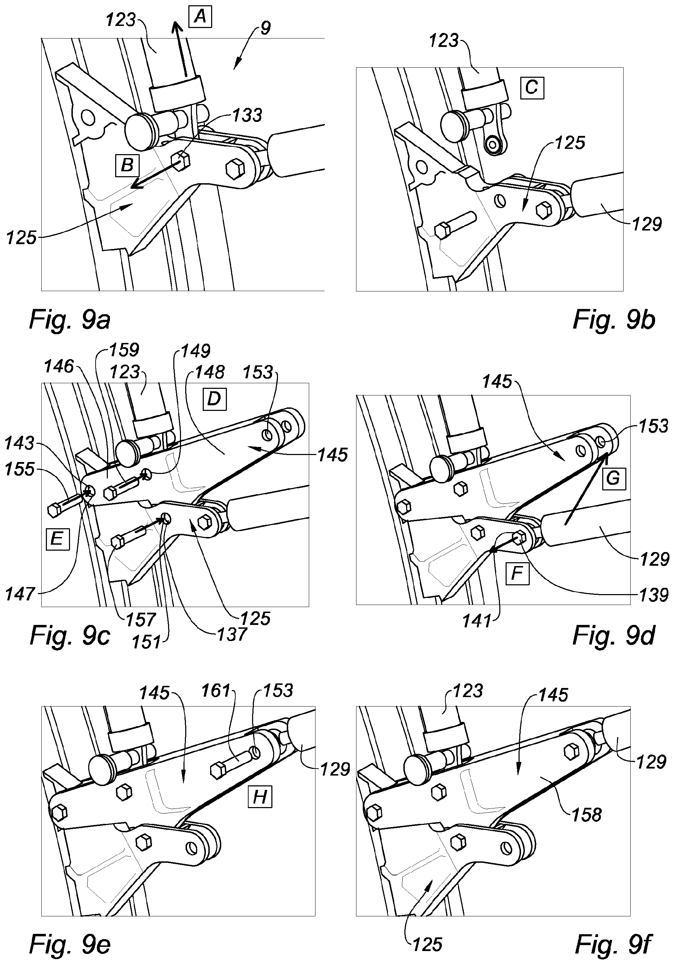

Lorsqu'un opérateur souhaite réaliser des opérations de maintenance irrégulières, opérations concernant des équipements de l'ensemble propulsif généralement positionnés à proximité du mât de suspension du turboréacteur, et plus généralement dans une zone de l'ensemble propulsif nécessitant un angle d'ouverture de chaque demi-capot d'inverseur compris entre 50 et 60 degrés environ, l'opérateur procède de la façon suivante, suivant le procédé d'ouverture de capots mobiles de l'ensemble propulsif selon l'invention, dont les étapes sont illustrées aux figures 9a à 9f auxquelles on se réfère à présent.

Lorsque les demi-capots 9 se trouvent en position de fonctionnement, c'est-à-dire fermés, l'opérateur actionne les vérins 123 afin de les allonger (étape A de la figure 9a) jusqu'à ce qu'ils arrivent en butée de fin de course et qu'ils se trouvent dans une position selon laquelle les demi-capots 9 sont ouverts dans une position permettant des opérations de maintenance régulières, position présentant typiquement un angle d'ouverture compris entre environ 30 et environ 45 degrés par rapport à leur position de fonctionnement. Cette position est représentée à la figure 9a.

Dans cette position, les demi-capots 9 sont maintenus en position de maintenance régulière par l'intermédiaire des bielles de sécurité 129, qui se trouvent verrouillées, en butée. Dans cette position, aucun effort ne transite par les vérins 123, et l'opérateur retire les tiges 133 sur lesquelles sont montés les vérins 123 (étape B), ce qui permet de déconnecter les vérins 123 de leur ferrure principale 125, en toute sécurité. L'extrémité fixe de chaque vérin 123 est alors déplacée de façon à raccourcir la longueur du vérin (étape C), comme l'illustre la figure 9b.

Comme représenté à la figure 9c, l'opérateur positionne une ferrure secondaire 145 sur la ferrure principale 125 (étape D). La ferrure secondaire présente une forme sensiblement triangulaire, présentant une base 146 et une extension 148, et est dimensionnée pour permettre des opérations de maintenance irrégulières, et présente à cet effet des caractéristiques mécaniques et une géométrie adaptées pour supporter des opérations de maintenance autorisant un accès au turboréacteur pour des opérations de maintenance irrégulières.

La ferrure secondaire 145 comprend quatre alésages 147, 149, 151, 153, par exemple traversant l'épaisseur de la ferrure, dont un positionnement dans l'alignement de certains des alésages de la ferrure principale permet le maintien de la ferrure secondaire sur la ferrure principale, par l'intermédiaire de tiges traversant lesdits alésages. Les alésages 147, 149 et 151 sont réalisés au niveau de la base 146 de la ferrure secondaire 145, et l'alésage 153 est quant à lui réalisé au niveau de l'extension 148 de la ferrure secondaire.

L'opérateur introduit une tige de maintien 155 traversant l'alésage 147 de la ferrure secondaire et l'alésage 143 de la ferrure principale, et une tige de maintien 157 traversant l'alésage 151 de la ferrure secondaire et l'alésage 137 de la ferrure principale, ce qui assure le maintien de la ferrure secondaire 145 sur la ferrure principale 125. L'opérateur introduit ensuite une tige de maintien 159 traversant l'alésage 149 de la ferrure secondaire 145 et supportant le vérin 123 (étape E). L'opérateur ajuste alors le vérin de façon à soulager la bielle de sécurité 129, jusqu'à ce que le vérin 123 reprenne les efforts du demi-capot 9 associé.

Comme l'illustre la figure 9d, la tige 139 sur laquelle est montée la bielle de sécurité 129 est retirée (étape F), et la bielle 129 est déconnectée de la ferrure principale 125. L'extrémité de la bielle de sécurité 129 est déplacée en direction de l'alésage 153 de la ferrure secondaire 145 (étape G).

La bielle de sécurité 129 est alors fixée sur l'extension 148 de la ferrure secondaire 145 par l'intermédiaire d'une tige de maintien 161 traversant l'alésage 153 de la ferrure secondaire 145 (étape H).

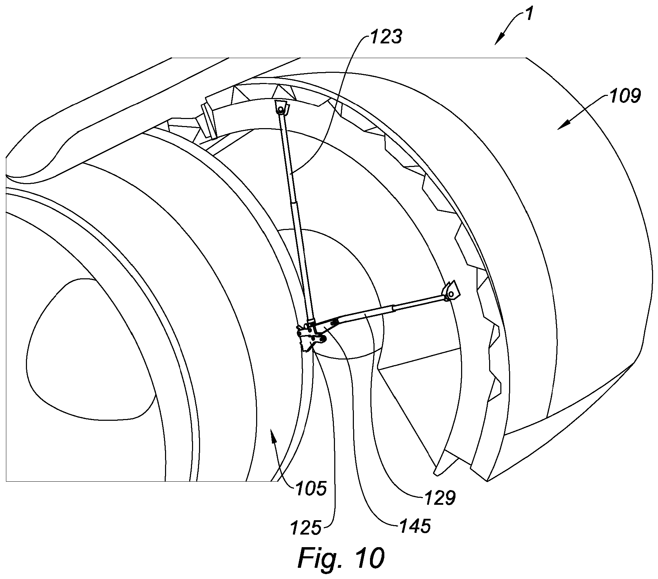

La figure 9f illustre l'ensemble propulsif selon l'invention, équipé de la ferrure secondaire 145 selon l'invention, sur laquelle sont fixés le vérin COS 123 et la bielle de sécurité HOR 129. L'ensemble propulsif 101 selon l'invention est illustré à la figure 10 en position de maintenance permettant de réaliser des opérations de maintenance irrégulières.

La présence de la ferrure secondaire 145 a permis de déplacer les points d'attache du vérin 123 et de la bielle de sécurité 129 de quelques centimètres par rapport à ceux initialement prévus sur la ferrure principale 125 pour réaliser des opérations de maintenance régulières. Plus précisément, la présence de la ferrure secondaire permet d'augmenter de quelques centimètres la distance relative entre le point d'attache du vérin COS et la ferrure principale, ainsi que la distance relative entre le point d'attache de la bielle de sécurité HOR et la ferrure principale. Cela permet d'obtenir une course du vérin COS et une longueur de la bielle de sécurité HOR plus importante par rapport à celles obtenues lorsque les vérins COS et les bielles de sécurité HOR étaient positionnés sur la ferrure principale. On conserve alors une course de vérin et une longueur de bielle identique pour les opérations de maintenance régulières et irrégulières, ce qui permet d'avoir des vérins COS et des bielles HOR avec une seule position stable et dimensionnés pour des opérations de maintenance régulières uniquement, contrairement aux vérins COS et aux bielles HOR de l'art antérieur, dimensionnés pour supporter les opérations de maintenance irrégulières nécessitant un angle d'ouverture des demi-capots plus important que celui requis pour réaliser des opérations de maintenance régulières. Cela permet alors de réduire le poids de l'ensemble propulsif en ce que le poids des bielles HOR, des vérins COS et de la ferrure principale est inférieur à celui obtenu selon l'art antérieur dans lequel ces pièces sont plus complexes, en raison de la nécessité de deux positions stables et de leur surdimensionnement.

Selon un deuxième mode de réalisation de l'invention, la ferrure secondaire est montée à demeure sur la ferrure principale, soit de façon à ce qu'elle permette des opérations de maintenance régulières, soit de façon à ce qu'elle permette des opérations de maintenance irrégulières. A la différence du premier mode de réalisation qui prévoit de monter la ferrure secondaire sur la ferrure principale uniquement lorsque l'on souhaite réaliser des opérations de maintenance irrégulières, le deuxième mode de réalisation prévoit un montage permanent de la ferrure secondaire sur la ferrure principale.

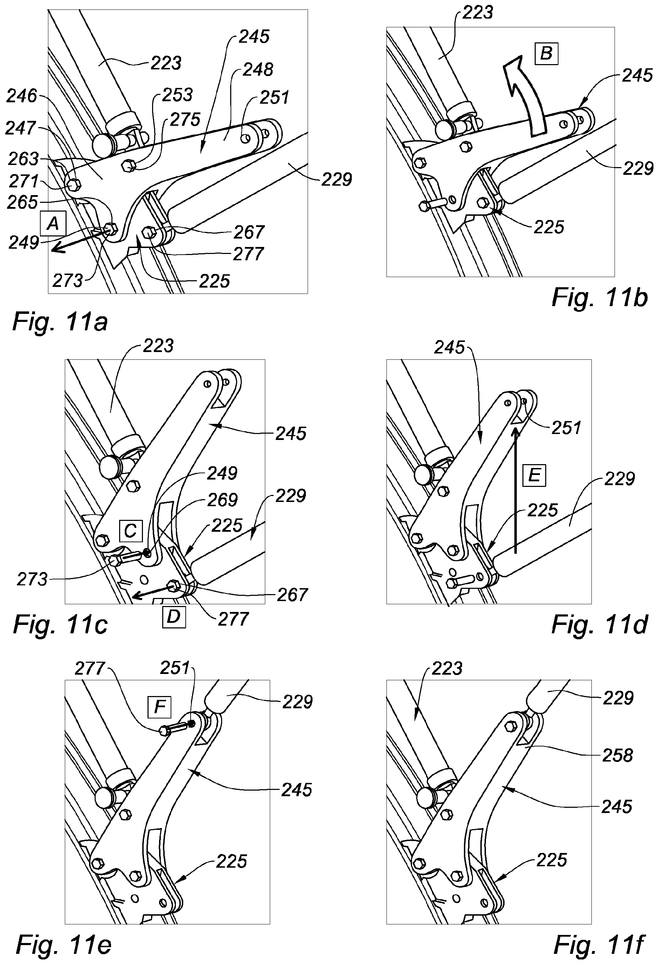

Selon une première variante de ce deuxième mode de réalisation, représenté aux figures 11a à 11f auxquelles on se réfère à présent, la ferrure secondaire 245 présente une forme sensiblement triangulaire, présentant une base 246 et une extension 248.

La ferrure principale 225 comprend quatre alésages 263, 265, 267 et 269 (269 visible sur la figure 11c), par exemple traversant l'épaisseur de la ferrure principale, et la ferrure secondaire comprend elle aussi quatre alésages 247, 249, 251, 253, par exemple traversant l'épaisseur de la ferrure secondaire. Les alésages 247, 249 et 251 sont réalisés au niveau de la base 246 de la ferrure secondaire 245, et l'alésage 253 est quant à lui réalisé au niveau de l'extension 248 de la ferrure secondaire.

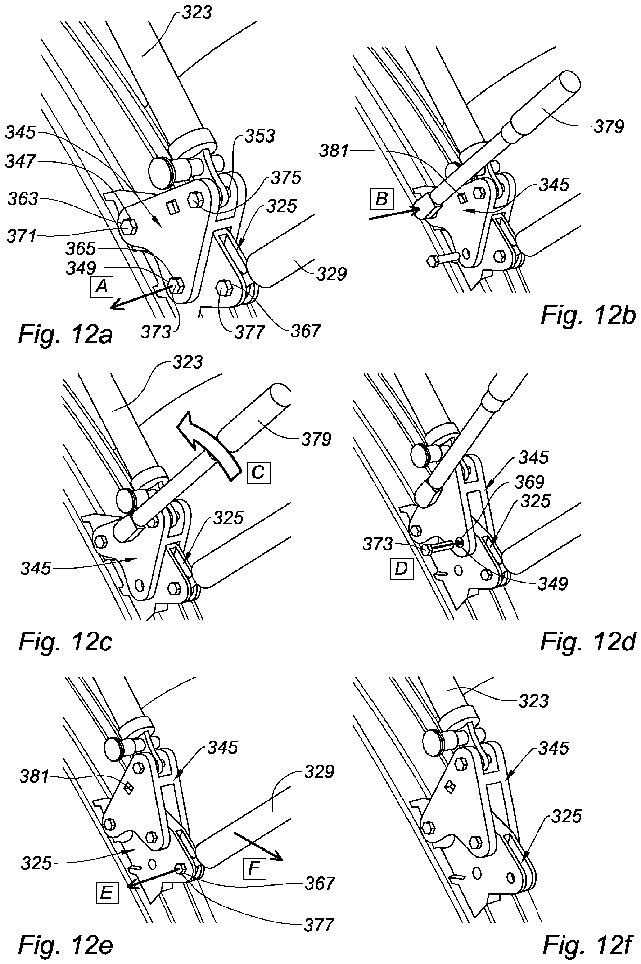

Lorsque les demi-capots 9 se trouvent en position de maintenance pour réaliser des opérations de maintenance régulières, position représenté à la figure 11a, les alésages 247 et 249 de la ferrure secondaire 245 sont respectivement positionnés en vis-à-vis des alésages 263 et 265 de la ferrure principale 225. Des tiges de maintien 271 et 273, chacune sensiblement transverse à une paroi latérale de la ferrure principale, traversent respectivement les alésages 247, 263, et les alésages 249, 265, ce qui permet le maintien de la ferrure secondaire sur la ferrure principale, tant en position de maintenance représentée sur la figure 12a qu'en position de fonctionnement, position non représentée.

En position de fonctionnement et en position de maintenance pour réaliser des opérations de maintenance régulières, la partie fixe du vérin 223 est montée sur la ferrure secondaire 245 grâce à une tige de maintien 275 traversant l'alésage 253 de la ferrure secondaire, et la partie mobile dudit vérin est fixée sur une ferrure montée sur le demi-capot d'inverseur. Dans ces mêmes positions, la bielle de sécurité 229 est quant à elle reliée à la ferrure principale 225 par l'intermédiaire d'une tige de maintien 277 traversant l'alésage 267 de la ferrure principale, et à une ferrure montée sur le demi-capot d'inverseur.

Lorsqu'un opérateur souhaite réaliser des opérations de maintenance irrégulières, il procède de la façon suivante, pour chaque ensemble constitué du vérin COS et de la bielle HOR.

L'opérateur retire la tige de maintien 273 traversant les alésages 249 et 265 (étape A).

L'opérateur effectue ensuite, manuellement et sans outillage, une rotation de la ferrure secondaire 245 (étape B, figure 11b), dans le sens anti-horaire lorsque l'on regarde l'ensemble propulsif depuis l'amont vers l'aval. En faisant pivoter de la sorte la ferrure secondaire 245, la distance relative entre le point d'attache du vérin 223 et la ferrure principale 225 a été augmentée de quelques centimètres. Cela permet d'obtenir une course du vérin 223 plus importante par rapport à celle obtenue lorsque la ferrure secondaire 245 était montée sur la ferrure principale 225 dans sa position illustrée à la figure 11a.

Lorsque le vérin 223 se trouve dans la position représentée à la figure 11c, la tige de maintien 273 est introduite dans l'alésage 249 de la ferrure secondaire 245, qui se retrouve positionné en vis-à-vis de l'alésage 269 de la ferrure principale 225 (étape C). La tige 277 assurant le maintien de la bielle de sécurité 229 sur la ferrure principale 225 est retirée de l'alésage 267 (étape D).

Comme illustré à la figure 11d, la bielle de sécurité 229 est déconnectée de la ferrure principale 225, et l'extrémité de ladite bielle est déplacée en direction de l'alésage 251 de la ferrure secondaire 245 (étape E).

La bielle de sécurité 229 est alors fixée sur l'extension 258 de la ferrure secondaire 245 par l'intermédiaire de la tige de maintien 277, traversant à présent l'alésage 251 de la ferrure secondaire 245 (étape H).

La figure 11f illustre l'ensemble propulsif selon l'invention, équipé de la ferrure secondaire 245 selon l'invention, sur laquelle sont fixés le vérin COS 223 et la bielle de sécurité HOR 229.

La rotation de la ferrure secondaire 245 a permis d'augmenter de quelques centimètres la distance relative entre le point d'attache du vérin 223 et la ferrure principale 225, ainsi que la distance relative entre le point d'attache de la bielle de sécurité 229 et la ferrure principale, par rapport à leur position selon laquelle le vérin et la bielle de sécurité permettent de réaliser des opérations de maintenance régulières. Cela permet d'obtenir une course du vérin 223 et une longueur de bielle de sécurité plus importantes par rapport à celles obtenues lorsque la ferrure secondaire 245 était montée sur la ferrure principale 225 dans la position illustrée à la figure 11a.

Comme pour le premier mode de réalisation, ce deuxième mode permet d'avoir des vérins COS et des bielles HOR avec une seule position stable et dimensionnés pour des opérations de maintenance régulières uniquement, contrairement aux vérins COS et aux bielles HOR de l'art antérieur, dimensionnés pour supporter les opérations de maintenance irrégulières nécessitant un angle d'ouverture des demi-capots plus important que celui requis pour réaliser des opérations de maintenance régulières. Cela permet alors de réduire le poids de l'ensemble propulsif en ce que le poids des bielles HOR, des vérins COS et de la ferrure principale est inférieur à celui obtenu selon l'art antérieur dans lequel ces pièces sont plus complexes en raison de la nécessité de deux positions stables et de leur surdimensionnement.

Selon une deuxième variante de ce deuxième mode de réalisation, représenté aux figures 12a à 12f auxquelles on se réfère à présent, la ferrure secondaire 345 présente une forme sensiblement triangulaire.

La ferrure principale 325 est identique à la ferrure principale 225 et comprend quatre alésages 363, 365, 367 et 369 (369 visible sur la figure 12d), par exemple traversant l'épaisseur de la ferrure principale. La ferrure secondaire 345 diffère des ferrures secondaires 145 et 245 en ce qu'elle ne présente pas d'extension. La ferrure secondaire 345 comprend trois alésages 347, 349, et 353, par exemple traversant l'épaisseur de la ferrure secondaire.

Lorsque les demi-capots 9 se trouvent en position de maintenance pour réaliser des opérations de maintenance régulières, position représenté à la figure 12a, les alésages 347 et 349 de la ferrure secondaire 345 sont respectivement positionnés en vis-à-vis des alésages 363 et 365 de la ferrure principale 325. Des tiges de maintien 371 et 373, chacune sensiblement transverse à une paroi latérale de la ferrure principale, traversent respectivement les alésages 347, 363, et les alésages 349, 365, ce qui permet le maintien de la ferrure secondaire sur la ferrure principale tant en position de maintenance représentée sur la figure 12a qu'en position de fonctionnement, position non représentée.

En position de fonctionnement et en position de maintenance pour réaliser des opérations de maintenance régulières, la partie fixe du vérin 323 est montée sur un des sommets du triangle constitué par la ferrure secondaire 345, grâce à une tige de maintien 375 traversant l'alésage 353 de la ferrure secondaire, et la partie mobile dudit vérin est fixée sur une ferrure montée sur le demi-capot d'inverseur. Dans ces mêmes positions, la bielle de sécurité 329 est quant à elle reliée à la ferrure principale 325 par l'intermédiaire d'une tige de maintien 377 traversant l'alésage 367 de la ferrure principale, et à une ferrure montée sur le demi-capot d'inverseur.

Lorsqu'un opérateur souhaite réaliser des opérations de maintenance irrégulières, il procède de la façon suivante, pour chaque ensemble constitué du vérin COS et de la bielle HOR.

L'opérateur retire la tige de maintien 373 traversant les alésages 349 et 365 (étape A).

L'opérateur introduit ensuite une clé 379 dans un carré d'entraînement 381 de la ferrure secondaire 345 (étape B, figure 12b). Cette clé est de type standard et permet de monter temporairement un bras de levier sur la ferrure secondaire 345. L'opérateur effectue ensuite une rotation de la ferrure secondaire 345 (étape C, figure 12c) grâce à la clé 379, dans le sens anti-horaire lorsque l'on regarde l'ensemble propulsif depuis l'amont vers l'aval. En faisant pivoter de la sorte la ferrure secondaire 345, la distance relative entre le point d'attache du vérin 323 et la ferrure principale 325 a été augmentée de quelques centimètres. Cela permet d'obtenir une course du vérin 323 plus importante par rapport à celle obtenue lorsque la ferrure secondaire 345 était montée sur la ferrure principale 325 dans sa position illustrée à la figure 12a.

Lorsque le vérin 323 se trouve dans la position représentée à la figure 12d, la tige de maintien 373 est introduite dans l'alésage 349 de la ferrure secondaire 345, qui se retrouve positionné en vis-à-vis de l'alésage 369 de la ferrure principale 325 (étape D).

Comme représenté à la figure 12e, la clé est retirée du carré d'entraînement 381, et la tige 377 assurant le maintien de la bielle de sécurité 329 sur la ferrure principale 325 est retirée de l'alésage 367 (étape E). La bielle de sécurité 329 est alors déconnectée de la ferrure principale 325 (étape F), et l'extrémité de ladite bielle est déplacée au niveau d'un point d'attache (non représenté) prévu sur le turboréacteur, ledit point d'attache étant choisi de façon à permettre une ouverture du capot en position de maintenance irrégulière, présentant un angle d'ouverture supérieur à celui requis pour une opération de maintenance régulière.

La figure 12f illustre l'ensemble propulsif selon l'invention, équipé de la ferrure secondaire 345 selon l'invention, sur laquelle est fixé le vérin COS 323, la bielle de sécurité HOR 329 n'étant pas représentée sur cette figure.

La rotation de la ferrure secondaire 345 a permis d'augmenter de quelques centimètres la distance relative entre le point d'attache du vérin 323 et la ferrure principale 325, par rapport à sa position selon laquelle le vérin permet de réaliser des opérations de maintenance régulières. Cela permet d'obtenir une course du vérin 323 plus importante par rapport à celle obtenue lorsque la ferrure secondaire 345 était montée sur la ferrure principale 325 dans sa position illustrée à la figure 12a. La bielle de sécurité 329 est quant à elle positionnée sur un point d'attache du turboréacteur, distinct de la ferrure secondaire. Ce point d'attache est choisi de façon à ce que la bielle permette le maintien du capot dans une position autorisant des opérations de maintenance irrégulières de l'ensemble propulsif.

Comme pour le premier mode de réalisation et la première variante du deuxième mode de réalisation, cette variante permet d'avoir des vérins COS et des bielles HOR avec une seule position stable et dimensionnés pour des opérations de maintenance régulières uniquement, contrairement aux vérins COS et bielles HOR de l'art antérieur, dimensionnés pour supporter les opérations de maintenance irrégulières nécessitant un angle d'ouverture des demi-capots plus important que pour réaliser des opérations de maintenance régulières. Cela permet alors de réduire le poids de l'ensemble propulsif en ce que le poids des bielles HOR, des vérins COS et de la ferrure principale est inférieur à celui obtenu selon l'art antérieur dans lequel ces pièces sont plus complexes (deux positions stables) et sont surdimensionnées.

Selon un aspect commun aux deux modes de réalisation de l'invention, les câbles ou tuyaux disposés au niveau de la partie charnière des capots d'inverseur et alimentant des équipements solidaires des capots d'inverseur, sont également raccourcis par rapport à l'art antérieur, de manière à n'autoriser qu'une ouverture des capots d'inverseur dans une position de maintenance régulière.

Lorsque l'on souhaite déplacer l'ensemble propulsif en position de maintenance irrégulière, les pièces dans la zone charnière d'ouverture des capots sont retirées afin de ne pas empêcher l'ouverture des capots en position de maintenance irrégulière.

Cela permet avantageusement de limiter également le poids de l'ensemble propulsif, en ce que l'ensemble de ces tuyaux et câbles sont dimensionnés pour permettre l'ouverture du capot en position de maintenance autorisant de opérations de maintenance régulières uniquement.

La description de la présente demande fait référence à des capots d'inverseur de poussée, de type D-duct. Il doit bien être compris que la présente invention n'est nullement limitée aux demi-capots d'inverseur de type D-duct, mais qu'elle englobe au contraire tous types de capots mobiles de l'ensemble propulsif, comme par exemple un demi-capot C-duct d'un inverseur de poussée, une porte d'inverseur de poussée à portes, ou encore un demi-capot de carter de soufflante de turboréacteur.

Comme il va de soi, l'invention ne se limite pas aux seules formes de réalisation de l'ensemble propulsif, décrites ci-dessus uniquement à titre d'exemples illustratifs, mais elle embrasse au contraire toutes les variantes faisant intervenir les équivalents techniques des moyens décrits ainsi que leurs combinaisons si celles-ci entrent dans le cadre de l'invention.

## Revendications

1. Ensemble propulsif (101) pour aéronef, comprenant une nacelle et un turboréacteur, ledit ensemble propulsif comprenant :
- un ensemble stationnaire,
- au moins un capot, monté pivotant sur un axe (119) sensiblement colinéaire à un axe longitudinal (121) de l'ensemble propulsif, entre une position de fonctionnement et une position de maintenance permettant un accès au turboréacteur pour des opérations de maintenance régulières et des opérations de maintenance irrégulières, lesdites opérations de maintenance irrégulières nécessitant un angle d'ouverture dudit capot, par rapport à sa position de fonctionnement, supérieur à l'angle d'ouverture dudit capot requis pour réaliser des opérations de maintenance régulières,
- au moins un vérin (123) solidaire du capot mobile et solidaire de l'ensemble stationnaire par l'intermédiaire d'une ferrure principale (125) montée sur l'ensemble stationnaire, lorsque ledit capot se trouve en position de fonctionnement et en position de maintenance permettant un accès au turboréacteur pour des opérations de maintenance régulières,
- au moins une bielle de sécurité (129) solidaire du capot mobile et solidaire de l'ensemble stationnaire par l'intermédiaire de ladite ferrure principale (125), lorsque ledit capot se trouve en position de fonctionnement et en position de maintenance permettant un accès au turboréacteur pour des opérations de maintenance régulières,
dans lequel :
- le vérin (123) est dimensionné pour permettre un passage alternatif du capot entre une position de fonctionnement et une position de maintenance permettant un accès au turboréacteur pour des opérations de maintenance régulières uniquement,
- la bielle de sécurité (129) est dimensionnée pour maintenir le capot en position de maintenance permettant un accès au turboréacteur pour des opérations de maintenance régulières uniquement,
- la ferrure principale (125) est dimensionnée pour permettre des opérations de maintenance régulières uniquement,
et en ce qu'il comprend une ferrure secondaire (145) pour être montée sur la ferrure principale (125) pour des opérations de maintenance irrégulière uniquement, ladite ferrure secondaire étant dimensionnée pour permettre des opérations de maintenance irrégulières et supportant ledit vérin (123) déconnecté de la ferrure principale et ladite bielle de sécurité (129) déconnectée de la ferrure principale lorsque le capot est dans une position de maintenance permettant un accès au turboréacteur pour des opérations de maintenance irrégulières.

2. Ensemble propulsif (201) pour aéronef, comprenant une nacelle et un turboréacteur, ledit ensemble propulsif comprenant :
- un ensemble stationnaire,
- au moins un capot, monté pivotant sur un axe (119) sensiblement colinéaire à un axe longitudinal (121) de l'ensemble propulsif, entre une position de fonctionnement et une position de maintenance permettant un accès au turboréacteur pour des opérations de maintenance régulières et des opérations de maintenance irrégulières, lesdites opérations de maintenance irrégulières nécessitant un angle d'ouverture dudit capot, par rapport à sa position de fonctionnement, supérieur à l'angle d'ouverture dudit capot requis pour réaliser des opérations de maintenance régulières,
- au moins un vérin (223) solidaire du capot mobile et solidaire de l'ensemble stationnaire, ledit vérin (223) étant relié à une ferrure principale (225) montée sur l'ensemble stationnaire par l'intermédiaire d'une ferrure secondaire (245) montée sur ladite ferrure principale (225), lorsque ledit capot se trouve en position de fonctionnement et en position de maintenance permettant un accès au turboréacteur pour des opérations de maintenance régulières,
- au moins une bielle de sécurité (229) solidaire du capot mobile et solidaire de l'ensemble stationnaire par l'intermédiaire de ladite ferrure principale (225), lorsque ledit capot se trouve en position de fonctionnement et en position de maintenance permettant un accès au turboréacteur pour des opérations de maintenance régulières,
dans lequel :
- le vérin (223) est dimensionné pour permettre un passage alternatif du capot entre une position de fonctionnement et une position de maintenance permettant un accès au turboréacteur pour des opérations de maintenance régulières uniquement,
- la bielle de sécurité (229) est dimensionnée pour maintenir le capot en position de maintenance permettant un accès au turboréacteur pour des opérations de maintenance régulières uniquement,
- la ferrure principale (225) est dimensionnée pour permettre des opérations de maintenance régulières uniquement,
- la ferrure secondaire (245), montée de manière rotative sur la ferrure principale (225) pour être positionnée de façon à autoriser des opérations de maintenance irrégulières, est dimensionnée pour permettre des opérations de maintenance irrégulières et supporte ledit vérin (223), ainsi que ladite bielle de sécurité (229) déconnectée de la ferrure principale, lorsque le capot est dans une position de maintenance permettant un accès au turboréacteur pour des opérations de maintenance irrégulières.

3. Ensemble propulsif (301) pour aéronef, comprenant une nacelle et un turboréacteur, ledit ensemble propulsif comprenant :
- un ensemble stationnaire,
- au moins un capot, monté pivotant sur un axe (119) sensiblement colinéaire à un axe longitudinal (121) de l'ensemble propulsif, entre une position de fonctionnement et une position de maintenance permettant un accès au turboréacteur pour des opérations de maintenance régulières et des opérations de maintenance irrégulières, lesdites opérations de maintenance irrégulières nécessitant un angle d'ouverture dudit capot, par rapport à sa position de fonctionnement, supérieur à l'angle d'ouverture dudit capot requis pour réaliser des opérations de maintenance régulières,
- au moins un vérin (323) solidaire du capot mobile et solidaire de l'ensemble stationnaire, ledit vérin (323) étant relié à une ferrure principale (325) montée sur l'ensemble stationnaire par l'intermédiaire d'une ferrure secondaire (345) montée sur ladite ferrure principale (325), lorsque ledit capot se trouve en position de fonctionnement et en position de maintenance permettant un accès au turboréacteur pour des opérations de maintenance régulières,
- au moins une bielle de sécurité (329) solidaire du capot mobile et solidaire de l'ensemble stationnaire par l'intermédiaire de ladite ferrure principale (325), lorsque ledit capot se trouve en position de fonctionnement et en position de maintenance permettant un accès au turboréacteur pour des opérations de maintenance régulières,
dans lequel :
- le vérin (323) est dimensionné pour permettre un passage alternatif du capot entre une position de fonctionnement et une position de maintenance permettant un accès au turboréacteur pour des opérations de maintenance régulières uniquement,
- la bielle de sécurité (329) est dimensionnée pour maintenir le capot en position de maintenance permettant un accès au turboréacteur pour des opérations de maintenance régulières uniquement,
- la ferrure principale (325) est dimensionnée pour permettre des opérations de maintenance régulières uniquement,
- la ferrure secondaire (345), montée de manière rotative sur la ferrure principale (325) pour être positionnée de façon à autoriser des opérations de maintenance irrégulières, est dimensionnée pour permettre des opérations de maintenance irrégulières et supportant ledit vérin (323) lorsque le capot est dans une position de maintenance permettant un accès au turboréacteur pour des opérations de maintenance irrégulières.

4. Ensemble propulsif (201, 301) selon l'une quelconque des revendications 2 à 3, **caractérisé en ce que** la ferrure principale (225, 325) et la ferrure secondaire (245, 345) comprennent des alésages (247, 249, 251, 253, 263, 265, 267, 269, 347, 349, 353, 363, 365, 367, 369) adaptés pour recevoir des moyens de maintien de la ferrure secondaire (245, 345) dans une position permettant des opérations de maintenance régulières ou dans une position permettant des opérations de maintenance irrégulières ; ou ensemble propulsif (101) selon la revendication 1, **caractérisé en ce que** la ferrure principale (125) et la ferrure secondaire (145) comprennent des alésages (137, 141, 143, 147, 149, 151, 153) adaptés pour recevoir des moyens de maintien de la ferrure secondaire (145) dans une position permettant des opérations de maintenance irrégulières.

5. Ensemble propulsif (101, 201, 301) selon la revendication 4, **caractérisé en ce que** les moyens de maintien de la ferrure secondaire (145, 245, 345) sur la ferrure principale (125, 225, 325) comprennent des tiges de maintien (133, 139, 155, 157, 159, 161, 271, 273, 275, 277, 371, 373, 375, 377) adaptées pour traverser au moins partiellement lesdits alésages.

6. Ensemble propulsif (301) selon l'une quelconque des revendications 3 à 5, **caractérisé en ce que** la bielle de sécurité (329) est montée sur l'ensemble stationnaire de l'ensemble propulsif lorsque la ferrure secondaire est positionnée de façon à autoriser des opérations de maintenance irrégulières.

7. Ensemble propulsif (101, 201, 301) selon l'une quelconque des revendications 1 à 6, **caractérisé en ce que** la ferrure secondaire (145, 245, 345) présente une forme sensiblement triangulaire.

8. Ensemble propulsif (101, 201) selon l'une quelconque des revendications 1, 2, 4, 5 ou 7, **caractérisé en ce que** la bielle de sécurité (129, 229) est montée sur une extension (148, 248) de la ferrure secondaire (145, 245).

9. Ensemble propulsif (101, 201, 301) selon l'une quelconque des revendications 1 à 8, **caractérisé en ce que** le capot est constitué par un capot compris dans le groupe suivant : demi-capot d'inverseur de poussée de type D-duct, demi-capot d'inverseur de poussée de type C-duct, porte d'inverseur de poussée à portes, demi-capot de carter de soufflante du turboréacteur.

10. Procédé d'ouverture d'un capot mobile d'ensemble propulsif (101) selon l'une quelconque des revendications 1, 4, 5, 7, 8 ou 9, **caractérisé en ce qu'**il comprend les étapes suivantes visant à :
- allonger le vérin (123) jusqu'à ouvrir le capot dans une position adaptée pour des opérations de maintenance régulières ;
- déconnecter le vérin (123) de la ferrure principale ;
- positionner la ferrure secondaire (145) sur la ferrure principale (125) ;
- fixer le vérin (123) sur la ferrure secondaire (145) de façon à ce que ledit vérin reprennent les efforts du capot ;
- déconnecter la bielle de sécurité (129) de la ferrure principale (125) ;
- fixer la bielle de sécurité (129) sur la ferrure secondaire.

11. Procédé d'ouverture d'un capot mobile d'ensemble propulsif (201, 301) selon l'une quelconque des revendications 2 à 9, **caractérisé en ce qu'**il comprend les étapes suivantes visant à :
- allonger le vérin (223, 323) jusqu'à ouvrir le capot dans une position adaptée pour des opérations de maintenance régulières ;
- faire pivoter la ferrure secondaire (245, 345) de façon à au moins augmenter la distance relative entre un point d'attache du vérin (223, 323) et la ferrure principale (225, 325) ;
- déconnecter la bielle de sécurité (229, 329) de la ferrure principale (225, 325) ;
- fixer la bielle de sécurité (229, 329) sur la ferrure secondaire (245) ou sur l'ensemble stationnaire de l'ensemble propulsif.

## Patentansprüche

1. Antriebseinheit (101) für ein Flugzeug, umfassend eine Gondel und einen Turboreaktor, wobei die Antriebseinheit umfasst:
- eine stationäre Einheit,
- mindestens eine Haube, die auf einer Achse (119), die etwa kollinear zu einer Längsachse (121) der Antriebseinheit ist, zwischen einer Funktionsposition und einer Wartungsposition, die einen Zugriff auf den Turboreaktor für regelmäßige Wartungsoperationen und unregelmäßige Wartungsoperationen erlaubt, schwenkend angebracht ist, wobei die unregelmäßigen Wartungsoperationen einen Öffnungswinkel der Haube im Verhältnis zu ihrer Funktionsposition benötigen, der größer als der zur Durchführung regelmäßiger Wartungsoperationen erforderliche Öffnungswinkel der Haube ist,
- mindestens einen Zylinder (123), der mit der beweglichen Haube fest verbunden ist und mit der stationären Einheit über einen Hauptbeschlag (125) fest verbunden ist, der auf der stationären Einheit angebracht ist, wenn sich die Haube in Funktionsposition befindet und in Wartungsposition, die einen Zugriff auf den Turboreaktor für regelmäßige Wartungsoperationen erlaubt,
- mindestens einen Sicherheitspleuel (129), der mit der beweglichen Haube fest verbunden ist und mit der stationären Einheit über den Hauptbeschlag (125) fest verbunden ist, wenn sich die Haube in Funktionsposition befindet und in Wartungsposition, die einen Zugriff auf den Turboreaktor für regelmäßige Wartungsoperationen erlaubt,
wobei:
- der Zylinder (123) bemessen ist, um einen abwechselnden Wechsel der Haube zwischen einer Funktionsposition und einer Wartungsposition zu erlauben, die einen Zugriff auf den Turboreaktor nur für regelmäßige Wartungsoperationen erlaubt,
- der Sicherheitspleuel (129) bemessen ist, um die Haube in Wartungsposition zu halten, die einen Zugriff auf den Turboreaktor nur für regelmäßige Wartungsoperationen erlaubt,
- der Hauptbeschlag (125) bemessen ist, um nur regelmäßige Wartungsoperationen zu erlauben,
und dass sie einen sekundären Beschlag (145) umfasst, um auf dem Hauptbeschlag (125) nur für unregelmäßige Wartungsoperationen angebracht zu sein, wobei der sekundäre Beschlag bemessen ist, um unregelmäßige Wartungsoperationen zu erlauben und den vom Hauptbeschlag gelösten Zylinder (123) und den vom Hauptbeschlag gelösten Sicherheitspleuel (129) stützt, wenn die Haube in einer Wartungsposition ist, die einen Zugriff auf den Turboreaktor für unregelmäßige Wartungsoperationen erlaubt.

2. Antriebseinheit (201) für ein Flugzeug, umfassend eine Gondel und einen Turboreaktor, wobei die Antriebseinheit umfasst:
- eine stationäre Einheit,
- mindestens eine Haube, die auf einer Achse (119), die etwa kollinear zu einer Längsachse (121) der Antriebseinheit ist, zwischen einer Funktionsposition und einer Wartungsposition, die einen Zugriff auf den Turboreaktor für regelmäßige Wartungsoperationen und unregelmäßige Wartungsoperationen erlaubt, schwenkend angebracht ist, wobei die unregelmäßigen Wartungsoperationen einen Öffnungswinkel der Haube im Verhältnis zu ihrer Funktionsposition benötigen, der größer als der zur Durchführung regelmäßiger Wartungsoperationen erforderliche Öffnungswinkel der Haube ist,
- mindestens einen Zylinder (223), der mit der beweglichen Haube fest verbunden ist und mit der stationären Einheit fest verbunden ist, wobei der Zylinder (223) mit einem Hauptbeschlag (225) verbunden ist, der auf der stationären Einheit über einen sekundären Beschlag (245) angebracht ist, der auf dem Hauptbeschlag (225) angebracht ist, wenn sich die Haube in Funktionsposition befindet und in Wartungsposition, die einen Zugriff auf den Turboreaktor für regelmäßige Wartungsoperationen erlaubt,
- mindestens einen Sicherheitspleuel (229), der mit der beweglichen Haube fest verbunden ist und mit der stationären Einheit über den Hauptbeschlag (225) fest verbunden ist, wenn sich die Haube in Funktionsposition befindet und in Wartungsposition, die einen Zugriff auf den Turboreaktor für regelmäßige Wartungsoperationen erlaubt,
wobei:
- der Zylinder (223) bemessen ist, um einen abwechselnden Wechsel der Haube zwischen einer Funktionsposition und einer Wartungsposition zu erlauben, die einen Zugriff auf den Turboreaktor nur für regelmäßige Wartungsoperationen erlaubt,
- der Sicherheitspleuel (229) bemessen ist, um die Haube in Wartungsposition zu halten, die einen Zugriff auf den Turboreaktor nur für regelmäßige Wartungsoperationen erlaubt,
- der Hauptbeschlag (225) bemessen ist, um nur regelmäßige Wartungsoperationen zu erlauben,
- der sekundäre Beschlag (245), der rotatorisch auf dem Hauptbeschlag (225) angebracht ist, um derart positioniert zu sein, dass unregelmäßige Wartungsoperationen gestattet sind, dimensioniert ist, um unregelmäßige Wartungsoperationen zu erlauben und den Zylinder (223) stützt sowie den vom Hauptbeschlag gelösten Sicherheitspleuel (229), wenn die Haube in einer Wartungsposition ist, die einen Zugriff auf den Turboreaktor für unregelmäßige Wartungsoperationen erlaubt.

3. Antriebseinheit (301) für ein Flugzeug, umfassend eine Gondel und einen Turboreaktor, wobei die Antriebseinheit umfasst:
- eine stationäre Einheit,
- mindestens eine Haube, die auf einer Achse (119), die etwa kollinear zu einer Längsachse (121) der Antriebseinheit ist, zwischen einer Funktionsposition und einer Wartungsposition, die einen Zugriff auf den Turboreaktor für regelmäßige Wartungsoperationen und unregelmäßige Wartungsoperationen erlaubt, schwenkend angebracht ist, wobei die unregelmäßigen Wartungsoperationen einen Öffnungswinkel der Haube im Verhältnis zu ihrer Funktionsposition benötigen, der größer als der zur Durchführung regelmäßiger Wartungsoperationen erforderliche Öffnungswinkel der Haube ist,
- mindestens einen Zylinder (323), der mit der beweglichen Haube fest verbunden ist und mit der stationären Einheit fest verbunden ist, wobei der Zylinder (323) mit einem Hauptbeschlag (325) verbunden ist, der auf der stationären Einheit über einen sekundären Beschlag (345) angebracht ist, der auf dem Hauptbeschlag (325) angebracht ist, wenn sich die Haube in Funktionsposition befindet und in Wartungsposition, die einen Zugriff auf den Turboreaktor für regelmäßige Wartungsoperationen erlaubt,
- mindestens einen Sicherheitspleuel (329), der mit der beweglichen Haube fest verbunden ist und mit der stationären Einheit über den Hauptbeschlag (325) fest verbunden ist, wenn sich die Haube in Funktionsposition befindet und in Wartungsposition, die einen Zugriff auf den Turboreaktor für regelmäßige Wartungsoperationen erlaubt,
wobei:
- der Zylinder (323) bemessen ist, um einen abwechselnden Wechsel der Haube zwischen einer Funktionsposition und einer Wartungsposition zu erlauben, die einen Zugriff auf den Turboreaktor nur für regelmäßige Wartungsoperationen erlaubt,
- der Sicherheitspleuel (329) bemessen ist, um die Haube in Wartungsposition zu halten, die einen Zugriff auf den Turboreaktor nur für regelmäßige Wartungsoperationen erlaubt,
- der Hauptbeschlag (325) bemessen ist, um nur regelmäßige Wartungsoperationen zu erlauben,
- der sekundäre Beschlag (345), der rotatorisch auf dem Hauptbeschlag (325) angebracht ist, um derart positioniert zu sein, dass unregelmäßige Wartungsoperationen gestattet sind, dimensioniert ist, um unregelmäßige Wartungsoperationen zu erlauben und den Zylinder (323) stützt, wenn die Haube in einer Wartungsposition ist, die einen Zugriff auf den Turboreaktor für unregelmäßige Wartungsoperationen erlaubt.

4. Antriebseinheit (201, 301) nach einem der Ansprüche 2 bis 3, **dadurch gekennzeichnet, dass** der Hauptbeschlag (225, 325) und der sekundäre Beschlag (245, 345) Bohrungen (247, 249, 251, 253, 263, 265, 267, 269, 347, 349, 353, 363, 365, 367, 369) umfassen, die ausgelegt sind, um Haltemittel des sekundären Beschlags (245, 345) in einer Position zu empfangen, die regelmäßige Wartungsoperationen erlaubt, oder in einer Position, die unregelmäßige Wartungsoperationen erlaubt; oder Antriebseinheit (101) nach Anspruch 1, **dadurch gekennzeichnet, dass** der Hauptbeschlag (125) und der sekundäre Beschlag (145) Bohrungen (137, 141, 143, 149, 151, 153) umfassen, die ausgelegt sind, um Haltemittel des sekundären Beschlags (145) in einer Position zu empfangen, die unregelmäßige Wartungsoperationen erlaubt.

5. Antriebseinheit (101, 201, 301) nach Anspruch 4, **dadurch gekennzeichnet, dass** die Haltemittel des sekundären Beschlags (145, 245, 345) auf dem Hauptbeschlag (125, 225, 325) Haltestangen (133, 139, 155, 157, 159, 161, 271, 273, 275, 277, 371, 373, 375, 377) umfassen, die ausgelegt sind, um die Bohrungen mindestens zum Teil zu durchqueren.

6. Antriebseinheit (301) nach einem der Ansprüche 3 bis 5, **dadurch gekennzeichnet, dass** der Sicherheitspleuel (329) auf der stationären Einheit der Antriebseinheit angebracht ist, wenn der sekundäre Beschlag derart positioniert ist, dass unregelmäßige Wartungsoperationen gestattet sind.

7. Antriebseinheit (101, 201, 301) nach einem der Ansprüche 1 bis 6, **dadurch gekennzeichnet, dass** der sekundäre Beschlag (145, 245, 345) eine etwa dreieckige Form aufweist.

8. Antriebseinheit (101, 201) nach einem der Ansprüche 1, 2, 4, 5 oder 7, **dadurch gekennzeichnet, dass** der Sicherheitspleuel (129, 229) auf einer Erweiterung (148, 248) des sekundären Beschlags (145, 245) angebracht ist.

9. Antriebseinheit (101, 201, 301) nach einem der Ansprüche 1 bis 8, **dadurch gekennzeichnet, dass** die Haube aus einer Haube besteht, die in der folgenden Gruppe inbegriffen ist: Schubumkehr-Haubenhälfte vom Typ D-duct, Schubumkehr-Haubenhälfte vom Typ C-duct, Schubumkehr-Tür mit Türen, Gebläsegehäuse-Haubenhälfte des Turboreaktors.

10. Verfahren zum Öffnen einer beweglichen Haube einer Antriebseinheit (101) nach einem der Ansprüche 1, 4, 5, 7, 8 oder 9, **dadurch gekennzeichnet, dass** es die folgenden Schritte umfasst:
- Verlängern des Zylinders (123) bis zum Öffnen der Haube in einer Position, die für regelmäßige Wartungsoperationen geeignet ist;
- Lösen des Zylinders (123) vom Hauptbeschlag;
- Positionieren des sekundären Beschlags (145) auf dem Hauptbeschlag (125);
- Befestigen des Zylinders (123) auf dem sekundären Beschlag (145) derart, dass der Zylinder die Kräfte der Haube aufnimmt;
- Lösen des Sicherheitspleuels (129) vom Hauptbeschlag (125);
- Befestigen des Sicherheitspleuels (129) auf dem sekundären Beschlag.

11. Verfahren zum Öffnen einer beweglichen Haube einer Antriebseinheit (201, 301) nach einem der Ansprüche 2 bis 9, **dadurch gekennzeichnet, dass** es die folgenden Schritte umfasst:
- Verlängern des Zylinders (223, 323) bis zum Öffnen der Haube in einer Position, die für regelmäßige Wartungsoperationen geeignet ist;
- Schwenken des sekundären Beschlags (245, 345) derart, dass mindestens der relative Abstand zwischen einem Befestigungspunkt des Zylinders (223, 323) und dem Hauptbeschlag (225, 325) vergrößert wird;
- Lösen des Sicherheitspleuels (229, 329) vom Hauptbeschlag (225, 325);
- Befestigen des Sicherheitspleuels (229, 329) auf dem sekundären Beschlag (245) oder auf der stationären Einheit der Antriebseinheit.

## Claims

1. A propulsion unit (101) for an aircraft, comprising a nacelle and a turbojet engine, said propulsion unit comprising:
- a stationary unit,
- at least one cowl pivotally mounted on an axis (119) substantially collinear with a longitudinal axis (121) of the propulsion unit, between an operation position and a maintenance position enabling access to the turbojet engine for regular maintenance operations and non-regular maintenance operations, said non-regular maintenance operations requiring an opening angle of said cowl, relative to its operation position, larger than the opening angle of said cowl required to carry out regular maintenance operations,
- at least one cylinder (123) secured to the movable cowl and secured to the stationary unit by means of a main fitting (125) mounted on the stationary unit, when said cowl is in the operation position and in the maintenance position enabling access to the turbojet engine for regular maintenance operations,
- at least one safety connecting rod (129) secured to the movable cowl and secured to the stationary unit by means of said main fitting (125), when said cowl is in the operation position and in the maintenance position enabling access to the turbojet engine for regular maintenance operations,
wherein:
- the cylinder (123) is sized to enable an alternative passage of the cowl between an operation position and a maintenance position enabling access to the turbojet engine for regular maintenance operations only,
- the safety connecting rod (129) is sized to hold the cowl in the maintenance position enabling access to the turbojet engine for regular maintenance operations only,
- the main fitting (125) is sized to enable regular maintenance operations only,
and in that it comprises a secondary fitting (145) to be mounted on the main fitting (125) for non-regular maintenance operations only, said secondary fitting being sized to enable non-regular maintenance operations and supporting said cylinder (123) disconnected from the main fitting and said safety connecting rod (129) disconnected from the main fitting when the cowl is in a maintenance position enabling access to the turbojet engine for non-regular maintenance operations.

2. A propulsion unit (201) for an aircraft, comprising a nacelle and a turbojet engine, said propulsion unit comprising:
- a stationary unit,
- at least one cowl pivotally mounted on an axis (119) substantially collinear with a longitudinal axis (121) of the propulsion unit, between an operation position and a maintenance position enabling access to the turbojet engine for regular maintenance operations and non-regular maintenance operations, said non-regular maintenance operations requiring an opening angle of said cowl, relative to its operation position, larger than the opening angle of said cowl required to carry out regular maintenance operations,
- at least one cylinder (223) secured to the movable cowl and secured to the stationary unit, said cylinder (223) being connected to a main fitting (225) mounted on the stationary unit by means of a secondary fitting (245) mounted on the main fitting (225), when said cowl is in the operation position and in the maintenance position enabling access to the turbojet engine for regular maintenance operations,
- at least one safety connecting rod (229) secured to the movable cowl and secured to the stationary unit by means of said main fitting (225), when said cowl is in the operation position and in the maintenance position enabling access to the turbojet engine for regular maintenance operations,
wherein:
- the cylinder (223) is sized to enable an alternative passage of the cowl between an operation position and a maintenance position enabling access to the turbojet engine for regular maintenance operations only,
- the safety connecting rod (229) is sized to hold the cowl in the maintenance position enabling access to the turbojet engine for regular maintenance operations only,
- the main fitting (225) is sized to enable regular maintenance operations only,
- the secondary fitting (245), rotatably mounted on the main fitting (225) to be positioned so as to enable non-regular maintenance operations, is sized to enable non-regular maintenance operations and supports said cylinder (223), as well that said safety connecting rod (229) disconnected from the main fitting, when the cowl is in a maintenance position enabling access to the turbojet engine for non-regular maintenance operations.

3. A propulsion unit (301) for an aircraft, comprising a nacelle and a turbojet engine, said propulsion unit comprising:
- a stationary unit,
- at least one cowl pivotally mounted on an axis (119) substantially collinear with a longitudinal axis (121) of the propulsion unit, between an operation position and a maintenance position enabling access to the turbojet engine for regular maintenance operations and non-regular maintenance operations, said non-regular maintenance operations requiring an opening angle of said cowl, relative to its operation position, larger than the opening angle of said cowl required to carry out regular maintenance operations,
- at least one cylinder (323) secured to the movable cowl and secured to the stationary unit, said cylinder (323) being connected to a main fitting (325) mounted on the stationary unit by means of a secondary fitting (345) mounted on the main fitting (325), when said cowl is in the operation position and in the maintenance position enabling access to the turbojet engine for regular maintenance operations,
- at least one safety connecting rod (329) secured to the movable cowl and secured to the stationary unit by means of said main fitting (325), when said cowl is in the operation position and in the maintenance position enabling access to the turbojet engine for regular maintenance operations,
wherein:
- the cylinder (323) is sized to enable an alternative passage of the cowl between an operation position and a maintenance position enabling access to the turbojet engine for regular maintenance operations only,
- the safety connecting rod (329) is sized to hold the cowl in the maintenance position enabling access to the turbojet engine for regular maintenance operations only,
- the main fitting (325) is sized to enable regular maintenance operations only,
- the secondary fitting (345), rotatably mounted on the main fitting (325) to be positioned so as to enable non-regular maintenance operations, is sized to enable non-regular maintenance operations and supporting said cylinder (323) when the cowl is in a maintenance position enabling access to the turbojet engine for non-regular maintenance operations.

4. The propulsion unit (201, 301) according to any one of claims 2 and 3, **characterized in that** the main fitting (225, 325) and the secondary fitting (245, 345) comprise bores (247, 249, 251, 253, 263, 265, 267, 269, 347, 349, 353, 363, 365, 367, 369) adapted to receive means for holding the secondary fitting (245, 345) in a position enabling regular maintenance operations or in a position enabling non-regular maintenance operations; or the propulsion unit (101) according to claim 1, **characterized in that** the main fitting (125) and the secondary fitting (145) comprise bores (137, 141, 143, 147, 149, 151, 153) adapted to receive means for holding the secondary fitting (145) in a position enabling non-regular maintenance operations.

5. The propulsion unit (101, 201, 301) according to claim 4, **characterized in that** the means for holding the secondary fitting (145, 245, 345) on the main fitting (125, 225, 325) comprise holding rods (133, 139, 155, 157, 159, 161, 271, 273, 275, 277, 371, 373, 375, 377) adapted to pass at least partially through said bores.

6. The propulsion unit (301) according to any one of claims 3 to 5, **characterized in that** the safety connecting rod (329) is mounted on the stationary unit of the propulsion unit when the secondary fitting is positioned so as to authorize non-regular maintenance operations.

7. The propulsion unit (101, 201, 301) according to any one of claims 1 to 6, **characterized in that** the secondary fitting (145, 245, 345) has a substantially triangular shape.

8. The propulsion unit (101, 201) according to any one of claims 1, 2, 4, 5 or 7, **characterized in that** the safety connecting rod (129, 229) is mounted on an extension (148, 248) of the secondary fitting (145, 245).

9. The propulsion unit (101, 201, 301) according to any one of claims 1 to 8, **characterized in that** the cowl is constituted by a cowl from among the following group: half-cowl of a D-duct type thrust reverser, half-cowl of a C-duct type thrust reverser, door for a thrust reverser with doors, half-cowl of a fan casing of the turbojet engine.

10. A method for opening a movable cowl of a propulsion unit (101) according to any one of claims 1, 4, 5, 7, 8 or 9, **characterized in that** it comprises the following steps aiming at:
- extending the cylinder (123) until opening the cowl in a position adapted for regular maintenance operations;
- disconnecting the cylinder (123) from the main fitting;
- positioning the secondary fitting (145) on the main fitting (125);
- fixing the cylinder (123) on the secondary fitting (145) so that said cylinder takes on the forces of the cowl;
- disconnecting the safety connecting rod (129) from the main fitting (125);
- fixing the safety connecting rod (129) on the secondary fitting.

11. The method for opening a movable cowl of a propulsion unit (201, 301) according to any one of claims 2 to 9, **characterized in that** it comprises the following steps aiming at:
- extending the cylinder (223, 323) until opening the cowl in a position adapted for regular maintenance operations;
- making the secondary fitting (245, 345) pivot so as to at least increase the relative distance between an attachment point of the cylinder (223, 323) and the main fitting (225, 325);
- disconnecting the safety connecting rod (229, 329) from the main fitting (225, 325);
- fixing the safety connecting rod (229, 329) on the secondary fitting (245) or on the stationary unit of the propulsion unit.
